# EUROPEAN PATENT APPLICATION

(11) **EP 1 810 820 A1**
(43) Date of publication of application: **25.07.2007**
(21) Application number: 05025700.5
(22) Date of filing: 25.11.2005
(51) Int. Cl.: B32B 5/26, B32B 27/12

(54) **Decorative plastic sheet laminate and process for its preparation**

(71) Applicant: Romanore SpA, 46030 Pomponesco MN (IT); Fiscagomma S.p.A., 27029 Vigevano PV (IT); SO.GE.TEC. S.p.A., 34071 Cormons GO (IT)
(72) Inventor: Sibilia, Eugenio, 27025 Belcreda di Gambolo (PV) (IT); Costamagna, Achille, 27029 Vigevano (PV) (IT)
(74) Representative: Trupiano, Federica

(57) **Abstract**

The object of the present invention is a layered plastic panel of the "laminate" kind, a method for preparing the same and the use thereof as a decorative element, particularly for interior and exterior coverings, for making furnishings such as furniture, lamps or the like, or for making work surfaces of various kind and intended for a plurality of applications.

## Description

### OBJECT OF THE INVENTION

The object of the present invention is a layered plastic panel of the "laminate" kind, a method for manufacturing the same and the use thereof as a decorative element, particularly for interior and exterior coverings, for making furnishings such as furniture, lamps or the like, or for making various kinds of working surfaces, and intended for a plurality of applications.

### BACKGROUND OF THE INVENTION

The plastic laminate, also known as the HPL laminate, is a product obtained by means of high-pressure manufacture processes, and mainly consists of a kraft paper assembly, which is generally impregnated with a phenolic resin which is the "base" for the laminate, and at least one decorative sheet positioned on at least one surface of the kraft paper assembly. The decorative sheet is generally made of low-grammage cellulose impregnated with melamine resin. In the traditional HPL laminates, there may also be provided a surface sheet with a protective function, which is placed on the surface of the decorative sheet and generally also based on cellulose impregnated with melamine resin. The decorative/protective layers are generally called the "overlays".

For simplicity, two examples of simplified schemes relating to the manufacture of traditional plastic laminates are set forth herein below.
Laminate A:
   1) overlay
   2) decorative sheet
   3) kraft paper layers
   4) decorative sheet
   5) overlay
      or
laminate B:
   1) decorative sheet
   2) kraft paper layers
   3) decorative sheet

The products as described above exhibit high resistance to abrasion, water, impacts and chemicals and they further exhibit good mechanical characteristics. For this reason, they are widely used for example as coating elements, furnishings, working surfaces, interior partitions. Due to the particular type of applications, people have been working hard, and still work hard for manufacturing new products which, while generally maintaining good mechanical and technical characteristics, also exhibit improved aesthetic and mechanical aspects as compared with the prior art products.

For example, for special applications in the furniture field, laminated products with determined surface coatings are known, and among those, those laminated products with surface coatings obtained by means of polymers that are capable of giving a "leather-like" effect are particularly interesting.

This kind of product is obtained by means of two different processes: the first one is the actual preparation of a "base" laminate consisting of kraft paper layers impregnated with phenolic resin, by means of HPL process, which allows obtaining a "raw" HPL laminate; the second, subsequent process, provides a coupling between the "raw" laminate and a finishing surface layer that exhibits the aesthetic characteristics desired and which for example may be made of polyurethane. This subsequent coupling between the "raw" laminate and the surface, aesthetic layer is generally carried out by bonding the two components and is directly carried out by the manufacturer of the "raw" laminate, by third buyers of the "raw" laminate and manufacturers of the finished laminate or also directly by the end user of the product, for example directly by the furniture factory, when applied to the furniture field. The finished product can have one or more surface finishing layers, for protection purposes. The manufacture of laminates as described above, accordingly, entails at least two different and subsequent processing stages, one relating to the manufacture by means of high-pressure lamination of the "raw" laminate consisting of superimposed kraft paper sheets impregnated with phenolic resin, and the other one relating to the coupling by bonding of the "raw" laminate with the surface layer. In addition, the above products suffer from the drawback that they often have areas which are not perfectly coupled, i.e. non homogeneous. Furthermore, since they are provided by means of bonding, they tend to get easily "decoupled", also in subsequent processing steps, when they have, for example, to be subjected to thermoforming, and then shaped and folded according to preset shapes for the final use to which they are intended.

Still to the purpose of having new products which, as stated above, while generally maintaining good mechanical and technical characteristics, also have improved aesthetic and technical aspects as compared with the prior art products, laminate panels have been developed which are made with alternative materials from those used for the structure (kraft paper impregnated with phenolic resin) typically forming the base of the traditional laminates. For example, EP 249583 describes a decorative plastic laminate comprising a central body composed of a plurality of sheets made of alpha-cellulose optionally mixed with rayon fibers (cellulose acetate/cellulose xanthate), impregnated with amine resin, with the characteristic of providing at least one of said sheets as a decorated sheet or at least one decorative sheet interposed between said alpha-cellulose based sheets. The plastic laminate thus obtained has a transparency effect due to the base cellulose structure and maintains good mechanical characteristics. Due to the use of cellulose, however, the product results rather "heavy" as compared with, for example, the traditional laminates and suitable only to several uses in specific fields.

Other HPL plastic laminated products that have proved to be very interesting are the so-called thermoformable or post-formable, i.e. those hot-bendable products that maintain, after cooling, the desired curvature radius, either concave or convex. These products, however, to be advantageously shaped, require a thermoforming process subsequent to the lamination step, which entails the use of very high temperatures, even proximate to 400°C. Accordingly, it is understood that the thermoforming operation can be carried out only on suitable laminates, which can resist high temperatures without aesthetic damages, and have no decorative elements or layers on the surface thereof, which are sensitive to high temperature. What has been described above greatly restrains the scope in the field of thermoformable laminates, and reveals the need of developing novel products alternative to the traditional ones, which can be subjected to the process of thermoforming subsequent to the lamination step, without damages to the decorative component of the panel resulting from this operation. Furthermore, when prior art panels have been shaped, there is no way that they return to their original shape, thereby being disadvantageous in that, in case of errors or in case the shape has to be, even slightly, modified, the product has to be completely replaced, with considerable damages also in terms of costs.

### OBJECTS OF THE INVENTION

Accordingly, the object of the invention is to provide a layered plastic panel of the "laminate" kind which can be provided as finished in an individual work stage, particularly in the high-pressure lamination step (HPL).

Another object of the present invention is to provide a layered plastic panel of the "laminate" kind not resulting from any coupling by means of gluing of panels from different work steps.

It is also an object of the present invention to provide a layered plastic panel of the "laminate" kind which is homogeneous and does not create decoupling in the subsequent work steps or over time.

Yet another object of the present invention is to provide a layered plastic panel of the "laminate" kind which can be thermoformed without creating decoupling.

A further object of the present invention is to provide a layered plastic panel of the "laminate" kind which is light and maneuverable, which exhibits, at the same time, aesthetic characteristics such as transparency and translucence, and can be thermoformed at lower temperatures than those traditionally used for hot thermoforming .

A still further object of the present invention is to provide a layered plastic panel of the "laminate" kind which, after it has been shaped, can be also returned to the original shape, with consequent advantages, also in terms of costs.

An object of the present invention is also to provide a high- pressure lamination method for preparing a layered plastic panel of the "laminate" kind which is simple and comprises an individual main lamination step and does not require distinct and subsequent coupling steps for obtaining the finished product.

### DESCRIPTION

These and other objects and the advantages thereof, as will be better understood from the description below, are achieved by means of a layered plastic panel of the "laminate" type, which comprises a main part, or core, composed by at least one kraft paper sheet or layer impregnated with resin and at least one layer of a polymeric component selected from polyurethane, PVC, polyacrylate, and mixtures thereof, said core and said polymeric component being directly coupled to each other in the lamination step by the action of temperature and pressure.

Particularly, according to the invention, said polymeric component is advantageously selected as polyurethane, either alone or optionally associated/coupled with other polymers, such as for example polyester, in the form of non-woven fabric.

The main characteristic of said layered plastic panels of the "laminate" kind is that they are obtained by means of direct lamination of a layered product comprising both the main part or core in kraft paper impregnated with resin, particularly phenolic resin, and the surface polymeric part, which is usually polyurethane-based. Lamination is carried out at high-pressure and at temperatures which are suitable for the type of components being used. The polyurethane surface layer or mixtures thereof make the product particularly interesting from an aesthetic point of view, since according to the kind of polyurethane used and optionally the kind of various components to which it is admixed, the external appearance of the finished panel can be, for example, of the type "synthetic leather" or "fake leather". Whereby, panels of the "laminate" type can be obtained which have a surface finishing of a particular aesthetic value, though having the typical characteristics of a traditional laminated panel obtained according to the prior art, i.e. with the traditional techniques of coupling by means of bonding subsequent to the lamination step between core and surface layer with a "synthetic leather" effect. Still according to the present invention, the polyurethane surface layer can be processed, before the lamination step, for example by transferring a metal sheet on the surface thereof, which gives a particular aesthetic value to the finished panel.

The panels according to the invention have a number of advantages as compared with the prior art panels. Since they are obtained in an individual lamination step, they do not cause decoupling, either caused by the fact of being used for a long time or caused by any subsequent processing steps, such as thermoforming. The product can be easily obtained by means of an individual main processing step and thus does not require subsequent coupling steps, with considerable advantages also in terms of costs. Furthermore, the product according to the invention can be further processed in an easy manner and, since it is versatile, it can be used in a greater number of applications than that obtained according to the prior art.

The panel obtained according to the invention is particularly pleasing to the touch, due to the surface layer being provided in the material commonly known as "fake leather". A different tactile sense is thus provided by the product, for example a warmer feeling exhibited by the final product and a greater softness to pressure.

Particularly interesting is the application of the panel according to the invention to the furniture field, particularly for moving walls to be employed in waiting-rooms and/or business furniture. The same standard thicknesses can be obtained as with the prior art HPL plastic laminates. During the impregnation step, the paper has the usual resin rates, whereas the pressing step, according to the type of product one desires to obtain, is carried out for a minimum time of 60' and at a maximum temperature ranging between 100°C and 160°C.

As regards the material composing the so-called "fake leather", as already said, it is a polyurethane-based polymeric material, optionally admixed with other compatible polymeric components which are capable of ensuring the same final aesthetic effect, or further coupled, for example with polyester (non-woven fabric).

The panel according to the present invention can also be obtained by replacing the kraft paper core impregnated with phenolic resin with decorative paper impregnated with melamine resin.

The objects and advantages of the invention are also achieved by means of a layered decorative plastic panel of the "laminate" type comprising a main part, or core, formed by at least one layer or sheet of non-woven fabric based on polyester, polyamide, polyolefin, viscose and mixtures thereof.

Particularly, the panel according to the invention, which comprises at least one layer of non-woven fabric, can be advantageously coated with at least one protective layer such as made of low-grammage cellulose impregnated with melamine resin. Still according to the invention, said panel can be obtained by creating an alternation of layers of non-woven and cellulose impregnated with melamine resin, with an uppermost and a lowermost layer also of cellulose/melamine resin which has a protective function, in addition to a support function. Using non-woven fabric in the decorative layered panels according to the invention, allows obtaining considerably valuable products in terms of aesthetic appearance, which are provided with significant characteristics of lightness, when compared with the prior art products, which have similar aesthetic characteristics. For example, as compared with those products that are completely made of cellulose impregnated with melamine resin, the product being the object of the present invention is significatively lighter, more maneuverable and thus more versatile and suitable for various uses. Also in this case, various type of decorative layers and protective surface layers of the overlay type may be coupled to the non-woven layers.

This being a product of non-woven fabric, i.e. polyester, polyamide, polyolefin, viscose and mixtures thereof, subsequent thermoforming operations can be carried out at a temperature substantially lower than that commonly used for thermoforming of traditional laminates according to the prior art. The above will thus allow carrying out thermoforming, when required and necessary for the subsequent applications of the product, also with panels provided with decorative layers that are sensitive and potentially incompatible with high temperature. Thermoformed products will be thus obtained which are provided with decorations that could not be previously applied to the thermoformable according to prior art.

The panel according to the present invention has been purposely conceived such that the light can pass therethrough thus making the same pleasing to the eye and allowing the same to be advantageously used, for example, in the furniture field, particularly for lighting spots.

As a result of the innovative activity performed, a product has been obtained which associates the typical solidity of the plastic laminate according to the prior art to the flexibility and transparency of a non-woven fabric (TNT) preferably of polyester.

The panel obtained, for example, by joining these materials has, as already stated above, a body composed by overlays, i.e. paper consisting of cellulose with a very low grammage (max 50 gr/m²) impregnated with melamine resin alternating with non-woven fabric sheets (TNT).

If provided, the decorative part consists for example of various alternatives:
- paper with digital printing alternating with impregnated overlay sheets;
- impregnated, low weight decorative paper;
- colored, low-grammage, non-woven fabric which may also be impregnated, alternating with impregnated overlays;
- non-woven fabric colored by means of various methods, either impregnated and/or not impregnated, alternating with impregnated overlay sheets.

The product, due to its particular structure, is advantageously used for example in the field of interior design as a material allowing the light (both natural and artificial) to pass through, thereby any type of panel becomes aesthetically interesting for room lighting.

For example, an advantageous application is light spots for places such as discotheques and/or those implementations that are particularly sensitive to the aesthetic of each detail.

The thicknesses of the panels according to the invention characterized by the presence of at least one non-woven fabric layer are restricted by and restricting of the passage of light. This means that a layer has a maximum thickness of 2 mm for ensuring that light passes therethrough, while if the aesthetics of the panel is to be considered, (colour and consistency) then the thickness can considerably increase. In this case, the light will no longer pass through, but other advantages in terms of aesthetics will be obtained. Accordingly, greater thicknesses (within the limits set by the manufacture of the laminate), though not allowing the light to pass therethrough, are nevertheless appreciated due to their aesthetic value.

The major advantage of these products is the obvious possibility of making the plastic laminate lighter with a greater number of opportunities in various fields.

To manufacture the products according to the invention, several conditions have to be maintained:
- the overlay has to be impregnated with the usual specifications of more than 60 % resin,
- the duration of the pressing step is at least 60' and the manufacture temperature ranges between 100°C and 160°C.

Generally, the products being the object of the present invention can advantageously provide at least one protective surface layer, of the overlay type, which is typically made of cellulose paper impregnated with resin, for example melamine resin, according to the uses to which they are intended, as well as according to the characteristics to be given to the finished product. Also in this case, the presence of any surface protective layer for the product is provided during the design step and is also carried out in an individual main stage of hot lamination and under pressure for forming the finished product.

The method for preparing decorative layered panels of the "laminate" kind according to the present invention, is performed by means of the action of a heated press applying a pressure ranging between 40 kg/cm² and 150 kg/cm², preferably a pressure of about 80 kg/cm². The temperature at which the coupling step is carried out may range between 100°C and 400°C as a function of the characteristics of the products to be coupled.

Several practical implementations are given herein below by way of exemplary and non-limiting illustration of the present invention.

### EXAMPLE 1 (composition of the polymeric material of the "fake leather" surface layer)

The polymeric component that is coupled to the core or inner part, during the hot lamination and high-pressure step, for obtaining the decorative panel according to the findings consists at least of:
**a surface layer** with high-module which provides the product with the aesthetic characteristics (appearance, touch and the like) and the resistance to abrasion, scratch and atmospheric agents.

While the composition of said layer is preferably polyurethane-based, it may also be based on other polymers, of the type PVC, acrylic polymer dispersed in solvent or in water.

A polyurethane (PU) formulation is given by way of example:

| | |
|---|---|
| 35% dry PU solution | 720 gr |
| DMF (dimethylformamide) | 180 gr |
| Pigment | just enough |

Preferably also:
**an intermediate layer** with lower module, which as the previous one, contributes to provide the characteristics of colour and structural strength, preferably of polyurethane nature, but it may also be based on other polymers of the type PVC, acrylic polymer dispersed in solvent or water.

A polyurethane (PU) formulation is given by way of example:

| | |
|---|---|
| 35% PU solution from polycarbonate | 790 gr |
| DMF (dimethylformamide) | 110gr |
| Pigment | just enough |

Preferably also:
**an expanded layer** which contributes to achieve the desired thickness with a relatively reduced weight.

The composition of said layer is preferably based on polyurethane but it may be also based on other polymers of the type PVC, acrylic polymer dispersed in water/solvent.

A polyurethane (PU) formulation is given by way of example:

| | |
|---|---|
| Polyurethane pre-polymer from polyether | 925 gr |
| Expanding agent | 10 gr |
| Cross-linking agent | 65 gr |
| Pigment | just enough |

The total grammage of the composite expressed in gr/m² ranges between 30 gr/m² and 800 gr/m².

The above composite or composed layer may be used for providing the panel either as such, i.e. directly coupled during the lamination step with the base kraft paper impregnated with phenolic resin, or further coupled with a textile (textiles, non-wovens) or cellulose liner.

### EXAMPLE 2 (non-woven (TNT) tissue composition of the panel)

The non-woven tissue preferably consists of short fibers, with length ranging from 20mm to 90mm with count ranging between 0,001 Den and 4,5 Den.

The fibers can be of the type polyester, polyamide, polyolefins, viscose or mixtures thereof.

The manufacture cycle provides the following steps:
- opening the fibers in bales,
- forming the non-woven web(s) by carding the fibers with the composition and grammage as desired,
- binding the web(s) by means of water jets ("spunlace") and/or mechanical needling and/or chemical bonding (impregnating step with aqueous dispersions based on acrylic polymers, NBR, SBR , vinyl polymers, polyurethane polymers or mixtures thereof).

The grammage of the non-woven may range from 20 gr/m² to 3.000 gr/m², whereas the thickness of the non-woven may range from 0,1 mm to 8 mm.

By way of example, the main characteristics of several non-wovens that can be used in the process are reported below:

| | **Ex.A** | **Ex.B** | **Ex.C** | **Ex.D** |
|---|---|---|---|---|
| Weight (gr/m²) | 30 | 120 | 200 | 2000 |
| Thickness (mm) | 0,15 | 1,1 | 1,1 | 5 |
| Composition | 60%Viscose | 80%Polyester | 100%Polyester | 50%Polyester |
| | 15%Polyester | 20% Acrylic | | 50% NBR |
| | 25% Acrylic | | | |

When the panel is provided in a plurality of non-woven layers only until the desired thickness is obtained, which are coupled with each other by high-pressure lamination and at suitable temperatures, the product exhibits high flexibility and can be advantageously used for example for making furniture components such as wall lamps, top-quality decorative false ceilings, and the like.

The final product, according to the proportional amount relative to each type of material, has a lower specific weight than the traditional HPL plastic laminate.

The production will be carried out in the pressing step for a minimum time of 60' and at a temperature ranging between 100° and 160° C.

Also in this case, under suitable conditions, the product may be thermoformed, and then suitably shaped with the advantage that, compared with the traditional products laminated according to the prior art, it can be subjected to the thermoforming process at temperatures which are considerably lower than the temperatures used according to the prior art. Furthermore, the product can be shaped and, due to its characteristics thereof, it may also return to its original shape, with the consequent advantage that, in case of errors, or in case it is necessary to modify, even slightly, the shape thereof after shaping, the product does not require to be completely replaced, with considerable advantages also in terms of costs.

The invention will be now described more in detail with reference to the annexed drawings, which are intended as illustrative and non -limiting, where:

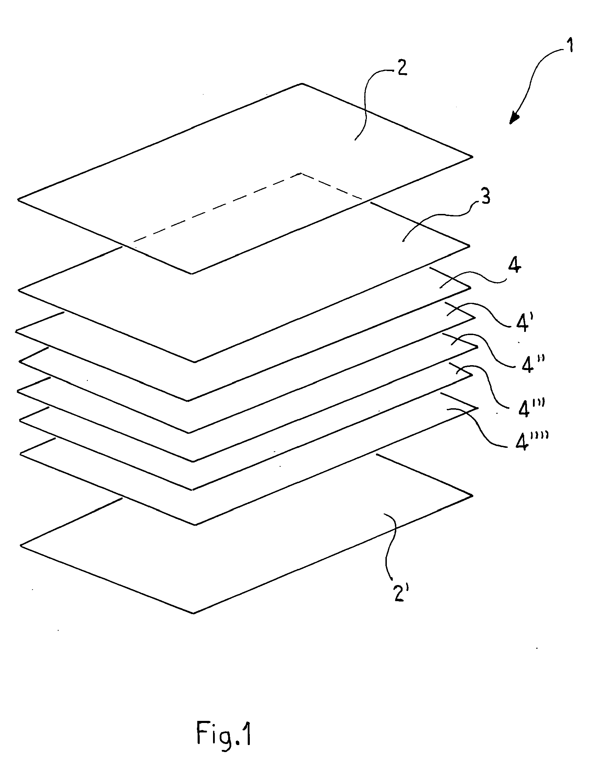

Fig. 1, 2 and 3 are exploded, schematic views of a decorative layered panel according to the invention.

With reference to Fig. 1, the panel 1 according to the invention comprises two layers 2 and 2' of cellulose impregnated with melamine resin, or overlays, which function as protective layers and are positioned at each upper and lower end of the panel 1. The panel 1 has a layer of a polymeric component, such as polyurethane 3. The inner part, or core, of the panel is, in this case, formed by a plurality of layers 4, 4', 4", 4"', 4"" of kraft paper impregnated with resin, such as phenolic resin. The protective layers 2 and 2' are transparent and may also be omitted, as well as the number of the layers composing the inner part or core can be varied, according to the thickness of the panel and the characteristics to be obtained.

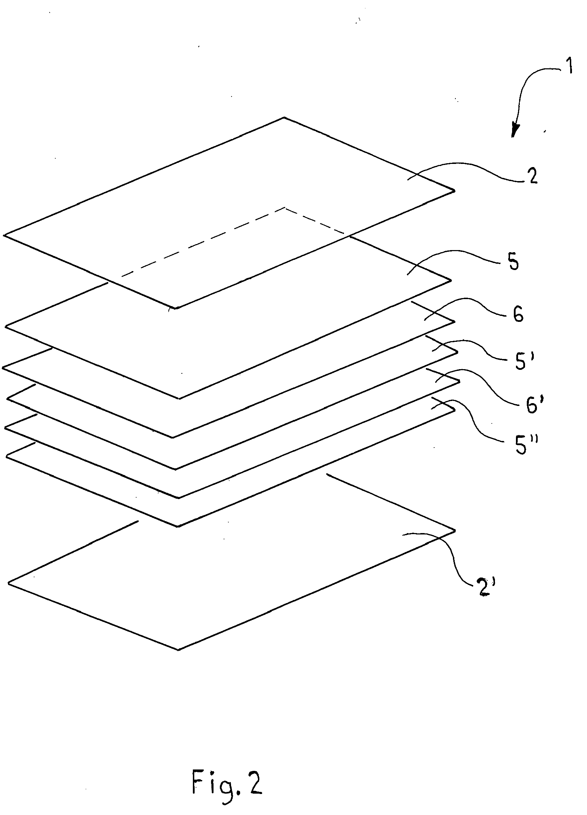

Fig. 2 relates to a further embodiment of the invention, in which the panel 1 comprises two layers 2 and 2' of cellulose impregnated with melamine resin, or overlays, which function as protective layers and are positioned at each upper and lower end of the panel. In this case, the inner part, or core, of the panel 1 is provided by a plurality of layers consisting of an alternation of non-woven layers (6 and 6') and cellulose impregnated with melamine resin (5, 5', 5"), where the uppermost 5 and lowermost 5" layers are always made of cellulose/melamine resin, which has a protective function in addition to support.

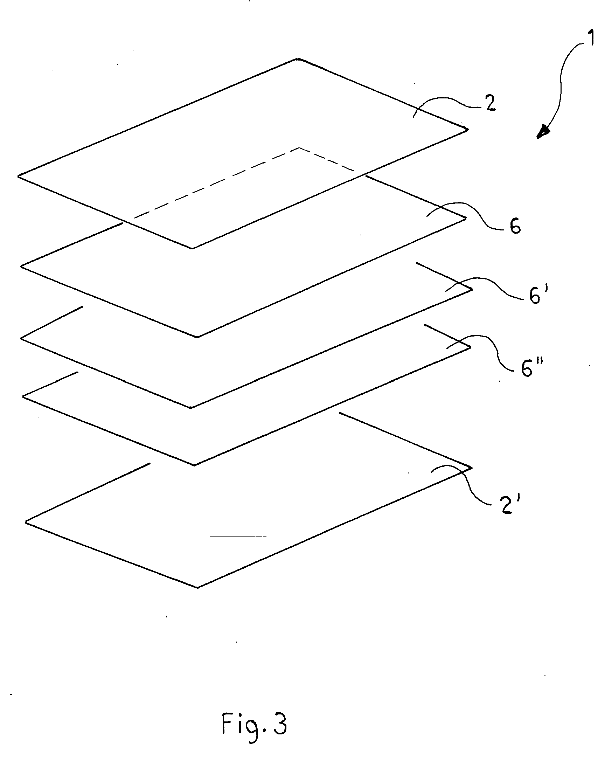

Fig. 3 relates to yet another embodiment of the invention, in which the panel 1 comprises two layers 2 and 2' of cellulose impregnated with melamine layer, or overlays, which function as protective layers and are positioned at each upper and lower end of the panel. In this case, the inner part, or core, of the panel 1 is provided by a plurality of layers 6, 6', 6" of only non-woven until the desired thickness is achieved, which are coupled to each other.

In the exemplary embodiments from Fig. 2 and 3, the protective layers 2 and 2' are also transparent and may also be omitted, as well as the number of layers composing the inner part, or core, can be varied according to the thickness of the panel and the characteristics to be obtained.

## Claims

1. Layered plastic decorative panel of the kind "laminate" (1), comprising a main part, or core, obtained from at least one sheet or layer of paper impregnated with resin (4) and at least one layer (3) of a polymeric component selected from polyurethane, PVC, polyacrylate, and mixtures thereof, said core and said polymeric component being directly coupled to each other in the lamination step by the action of the temperature and pressure.

2. The panel (1) according to claim 1, **characterized in that** said paper is kraft paper and said resin is phenolic resin.

3. The panel (1) according to claim 1, **characterized in that** said polymeric component (3) is polyurethane or mixtures thereof.

4. The panel (1) according to claim 3, **characterized in that** said polyurethane is coupled with polyester in the form of a non-woven.

5. Use of the panel (1) according to the preceding claims in the furniture field, for making moving walls, for making business furniture.

6. A layered decorative plastic panel of the kind "laminate" (1), comprising a main part, or core, made of at least one layer or sheet of non-woven (6) based on polyester, polyamide, polyolefin, viscose and mixtures thereof.

7. The panel (1) according to claim 6, **characterized in that** said core consists of an alternation of layers of non-woven (6) and paper (5) impregnated with resin.

8. The panel (1) according to claims 6 and 7, **characterized in that** said non-woven (6) is polyester or mixtures thereof.

9. The panel (1) according to claim 7, **characterized in that** said paper is cellulose or derivatives thereof, and said resin is melamine resin.

10. The panel (1) according to claim 9, **characterized in that** said cellulose has a maximum grammage of 50 gr/m².

11. The panel (1) according to claim 6, **characterized in that** said non-woven (6) provides a grammage ranging between 20 gr/m² and 3.000 gr/m² and a thickness ranging between 0,1 mm and 8 mm.

12. The panel (1) according to claim 9, **characterized in that** the uppermost and lowermost layers are always made of cellulose/melamine resin.

13. The panel (1) according to claims 6 to 12, **characterized in that** it further comprises at least one decorative component selected from:
- paper with digital printing alternating with impregnated overlay sheets and/or
- impregnated low-grammage decorative paper and/or
- low-grammage colored non-woven, optionally impregnated, alternating with impregnated overlay sheets and/or
- impregnated and/or non-impregnated colored non-woven, alternating with impregnated overlay sheets.

14. The panel (1) according to the claims 6 to 13, **characterized in that** it has a maximum thickness of 2 mm.

15. The panel (1) according to claims 6 to 13, **characterized in that** it has a thickness greater than 2 mm.

16. Use of the panel (1) of the preceding claims in the furniture field, for providing lighting spots.

17. The panel (1) according to claims 1 to 4, **characterized in that** said polymer component (3) consists of:
a surface layer as follows:
| | |
|---|---|
| 35% dry PU solution | 720 gr |
| DMF (dimethylformamide) | 180 gr |
| Pigment | just enough |
An intermediate layer as follows:
| | |
|---|---|
| 35% polycarbonate PU solution | 790 gr |
| DMF (dimethylformamide) | 110 gr |
| Pigment | just enough |
An expanded layer, as follows:
| | |
|---|---|
| Polyurethane pre-polymer from polyether | 925 gr |
| Expanding agent | 10 gr |
| Cross-linking agent | 65 gr |
| Pigment | just enough |

18. The panel (1) according to claim 17, **characterized in that** the total grammage of said polymer component expressed in gr/m² ranges between 30 gr/m² and 800 gr/m².

19. The panel (1) according to claims 6 to 15, **characterized in that** said non-woven consists of short fibers with a length ranging between 20mm and 90mm with count ranging between 0,001 Den and 4,5 Den.

20. The panel (1) according to claim 6, **characterized in that** said non-woven (6) has the following compositions:
A 60% viscose, 15% polyester, 25% acrylic
B 80% polyester, 20% acrylic
C 100% polyester
D 50% polyester, 50% NBR

21. The panel (1) according to the preceding claims, **characterized in that** it further comprises at least one protective outer layer (2).

22. The panel (1) according to claim 21, **characterized in that** said protective layer (2) is made of cellulose or derivatives thereof impregnated with melamine resin.

23. The panel (1) according to the preceding claims, **characterized in that** it is thermoformed.

24. A process for preparing a panel (1) according to the preceding claims, comprising a pressing step and a simultaneous coupling step carried out by the action of temperature.

25. Process according to claim 24, **characterized in that** said pressing step is carried out at a pressure in the range from 40 kg/cm² 150 kg/cm², preferably a pressure of 80 kg/cm².

26. Process according to claim 24, **characterized in that** said coupling step is carried out at a temperature ranging between 100°C and 400°C.

27. Process for preparing a panel (1) according to claim 24, **characterized in that** the duration of the pressing step is at least 60' and the temperature ranges between 100°C and 160°C.

28. Process for preparing a panel (1) according to claim 7, **characterized in that** said paper layers (5) are impregnated with at least 60% resin.

29. Use of a panel (1) according to the preceding claims for the building, furniture field.

30. Furniture elements, lighting elements, interior partitions made with the panels (1) of the preceding claims.
